(19) Europäisches Patentamt
European Patent Office
Office européen des brevets

(11) Numéro de publication: **0 277 060 B1**

(12) # FASCICULE DE BREVET EUROPEEN

(45) Date de publication du fascicule du brevet: **28.11.90**

(51) Int. Cl.[5]: **C10G 33/04**, B01D 17/04

(21) Numéro de dépôt: **88400081.1**

(22) Date de dépôt: **15.01.88**

(54) **Agent désémulsifiant et antisalissure apte à séparer des mélanges eau-hydrocarbures, éventuellement mis en émulsion, et applications de cet agent.**

(30) Priorité: **16.01.87 FR 8700454**

(43) Date de publication de la demande: **03.08.88 Bulletin 88/31**

(45) Mention de la délivrance du brevet: **28.11.90 Bulletin 90/48**

(84) Etats contractants désignés: **BE DE ES GB IT NL SE**

(56) Documents cités:
**EP-A- 0 078 489**
**US-A- 3 205 169**
**US-A- 4 209 422**
**US-A- 4 222 853**
**US-A- 4 269 271**
**US-A- 4 374 734**

(73) Titulaire: **COMPAGNIE DE RAFFINAGE ET DE DISTRIBUTION TOTAL FRANCE, 84, rue de Villiers, F-92300 Levallois Perret(FR)**

(72) Inventeur: **Durrieu, Marc, 155, rue Félix Faure, F-76620 Le Havre(FR)**
Inventeur: **Herrenschmidt, Patrice, 1, Avenue Pasteur Martin Luther King, F-78230 Le Pecq(FR)**
Inventeur: **Marty, Claude, 66, rue Guillemard, F-76660 Le Havre(FR)**

(74) Mandataire: **Jolly, Jean-Pierre et al, Cabinet BROT et JOLLY 83, rue d'Amsterdam, F-75008 Paris(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



ACTORUM AG

## Description

La présente invention a pour objet des agents désémulsifiants et antisalissures aptes à séparer des mélanges eau-hydrocarbures, éventuellement mis en émulsion, notamment des mélanges eau-pétrole brut contenant des sédiments.L'invention concerne également l'application de ces agents désémulsifiants à l'extraction des sels et des matières en suspension contenues dans les pétroles bruts, au cours des opérations de dessalage et/ou de déshydratation sur les champs de production pétroliers ou en raffinerie, préalablement à toute autre opération de raffinage.

Dans la suite de la présente description, l'appellation "matières en suspension" -en abrégé "MES"- s'appliquera à tout solide à l'état particulaire présent dans le pétrole brut, en particulier aux sédiments minéraux, aux sels de fer, aux carbènes et aux asphaltènes.

Il est connu que les sels et les matières en suspension sont présents dans les pétroles bruts à des concentrations variées, selon leur région d'origine. Les sels présents sont à l'origine de corrosions observées lors de la production, du transport ou du raffinage de ces pétroles bruts, tandis que les MES ont souvent une action stabilisante sur les émulsions eau-hydrocarbures, notamment les émulsions eau-pétrole brut lors des opérations de dessalage et de déshydration sur champ de production d'abord, puis en raffinerie.

Sur un champ de production d'huiles lourdes, l'élimination des sédiments est très difficile, voire impossible. Des techniques coûteuses, comme la centrifugation, sont généralement pratiquées, qui augmentent le coût de production, puis de raffinage de ces hydrocarbures extraits. Le problème est de trouver un moyen d'éliminer ces sédiments afin d'obtenir des hydrocarbures de qualité au moins aussi bonne et même meilleure, et cela de la façon la plus économique.

En raffinerie, lorsque les opérations de dessalage et de déshydratation du pétrole brut n'éliminent que partiellement les matières en suspension subsistant dans le pétrole brut, on observe un plus fort encrassement des échangeurs thermiques placés en amont de la distillation atmosphérique. Par ailleurs, si la teneur en sel du pétrole brut est trop élevée en sortie de dessalage, il y a des risques de corrosion en tête de tour de distillation atmosphérique. Pour limiter cette corrosion, il est d'usge d'introduire dans la charge, après le dessaleur, une quantité de soude proportionnelle à celle des sels contenus, ce qui a des conséquences néfastes sur la qualité de certains produits raffinés et le bon fonctionnement des opérations ultérieures de raffinage. En effet, le sodium ainsi introduit dans une charge de distillation atmosphérique se concentre dans le résidu atmosphérique et, consécutivement, il favorise la formation du coke dans les four s de procédé, empoisonne les catalyseurs d'unités de conversion (en particulier d'unité de craquage catalytique lorsqu'on traite les résidus atmosphériques chargés en sodium) et dégrade la qualité des fuels lourds. Toutes ces raisons font qu'il est préférable de diminuer la quantité de soude injectée dans une charge de distillation atmosphérique, en améliorant le dessalage et la déshydratation des hydrocarbures.

Les opérations de déshydratation et de dessalage sur champ de production et en raffinerie consistent à laisser décanter et/ou dessaler des émulsions eau-pétrole brut, formées naturellement ou de façon artificielle par lavage à l'eau. La teneur en eau de ces émulsions varie entre 0 et 50% en poids de l'émulsion. La séparation de l'émulsion se traduit pas la formation d'une "phase eau", chargée en sels et en matière en suspension, et une "phase brut", contenant les hydrocarbures et les sels et les MES résiduels. Cette séparation s'effectue plus ou moins bien dans un décanteur et peut être améliorée, notamment, par l'application dans le décanteur d'un ou plusieurs champs électrostatiques "haute tension", pour provoquer une coalescence plus rapide des gouttelettes d'eau.

C'est au cours de ces opérations qu'il se forme à l'interface de la "phase eau" et de la "phase brut" une émulsion appelée émulsion d'interface, qui est souvent stable, cette stabilité étant liée à la présence de matières en suspension.

Pour accélérer et améliorer la coalescence des gouttelettes d'eau et l'extraction des MES du pétrole brut, au cours des opérations de dessalage et/ou de déshydratation, et éviter ainsi la formation d'émulsion d'interface stable, il est courant d'ajouter au brut et/ou à l'eau de lavage, avant leur entrée dans le décanteur, au moins un agent désémulsifiant. Il est connu aussi d'introduire un deuxième agent désémulsifiant ayant un pouvoir antisalissure dans l'émulsion d'interface du dessaleur pour la destabiliser, comme il est décrit dans les brevets français N° 2 388 037 et 2 421 958 de la Demanderesse.

Ces agents, introduits seuls ou simultanément, présentent cependant une efficacité limitée dans les opérations de lavage et de dessalage, utilisées pour la déshydration du pétrole brut et l'extraction des sels et des "MES" qu'il contient.

Le but de la présente invention est d'introduire un seul additif dans l'eau de lavage des hydrocarbures et en particulier des pétroles bruts.

L'invention vise également à proposer un nouvel agent dont les propriétés anti-salissures et désémulsifiantes sont propres à accroître l'efficacité des traitements de dessalage et/ou de déshydratation et à diminuer la teneur en MES des hydrocarbures, pour limiter ainsi l'encrassement dans les traitements ultérieurs, tout en conservant une teneur en hydrocarbures basse dans l'eau récupérée à la sortie du décanteur.

Enfin, l'invention a également pour but, par l'obtention d'un meilleur dessalage, de diminuer les problèmes de corrosion rencontrés au cours des opérations de traitement sur champ ou de raffinage, de limiter les quantités de soude injectées après le dessaleur, de limiter le cockage des fours de procédé, de diminuer les risques d'empoisonnement des catalyseurs d'unités de conversion et d'améliorer la qualité des fuels lourds.

Dans ce but, la présente invention a pour objet un agent désémulsifiant et antisalissures soluble dans l'eau, apte à séparer les mélanges eau-hydrocarbures éventuellement mis en émulsion, notamment les émulsions eau-prétrole brut contenant des matières en suspension caractérisé en ce qu'il comprend:

– d'une part de 10 à 60% en poids d'une combinaison des composés suivants:

a) au moins un halogénure d'ammonium quaternaire tétra-alkylé de formule générale:

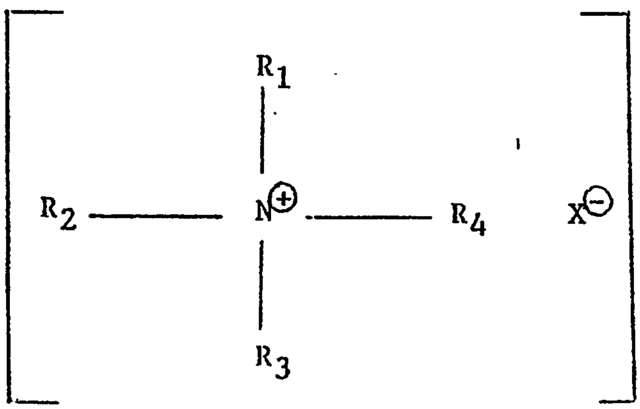

où X est un halogène; $R_1$, $R_2$ et $R_3$ étant des groupements alkyle de $C_1$ à $C_{10}$ et $R_4$ un groupement alkyle de $C_{12}$ à $C_{20}$,

b) au moins une alkylènediamine polypropoxypolyéthoxylée formule générale:

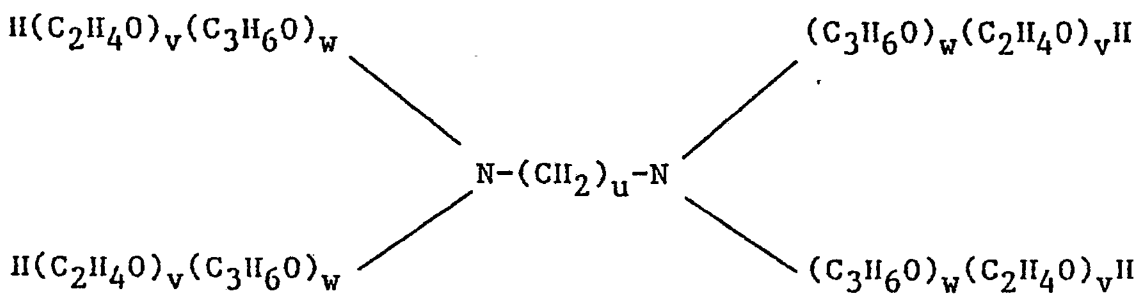

avec $1 \leq u \leq 4$, $1 \leq v \leq 50$ et $2 \leq w \leq 50$ et, de préférence, $2 \leq v \leq 30$ et $10 \leq w \leq 30$, ou son sulfate,

– et, d'autre part, de 90 à 40% en poids d'un solvant aqueux comprenant de 0 à 50% en poids d'un alcool choisi dans le groupe constitué par les alcanols et les polyols contenant de 1 à 10 atomes de carbone.

La Demanderesse a établi que les mélanges de composants appartenant à chacune des deux familles définies ci-dessus, éventuellement avec d'autres composants, peuvent agir par effet de synergie, préférentiellement sur les efficacités de déshydratation, de lavage et de dessalage d'un pétrole brut et/ou sur l'extraction des MES contenues dans celui-ci et/ou sur la quantité d'hydrocarbures présents dans l'eau recueillie après décantation.

Ainsi, pour améliorer les efficacités de déshydratation, de lavage et de dessalage des hydrocarbures et, plus particulièrement des pétroles bruts, l'agent selon l'invention peut comprendre avantageusement 40 à 5% en poids d'au moins un halogénure d'ammonium quaternaire tétra-alkylé et 5 à 30% en poids d'au moins une alkylènediamine polypropoxypolyéthoxylée tels que définis dans l'objet de l'invention.

Pour améliorer l'extraction des MES (matières en suspension) contenues dans les hydrocarbures et notamment dans les pétroles bruts très chargés en MES, ledit agent peut comprendre 40 à 10% en poids d'au moins un halogénure d'ammonium quaternaire tétra-alkylé et 5 à 35% en poids d'au moins un sulfate d'alkylènediamine polypropoxypolyéthoxylée mentionnés ci-dessus.

Les sulfates utilisables comme composant de l'agent conforme à l'invention sont obtenus selon un mode connu de l'homme de l'art mettant en oeuvre une réaction de sulfonation entre du trioxyde de soufre et au moins une alkylènediamine polypropoxypolyéthoxylée, telle que définie ci-dessus.

Les réactions de sulfonation étant rarement complètes, les sulfates obtenus ne sont pas purs et peuvent contenir la partie du composé de base n'ayant pas réagi avec le trioxyde de soufre. L'agent conforme à l'invention contenant l'halogénure d'ammonium quaternaire tétra-alkylé et un sulfate d'alkylènediamine polypropoxypolyéthoxylée oxylée peut donc comprendre également 0 à 5% en poids de l'alkylènediamine polypropoxypolyéthoxylée à partir de laquelle ledit sulfate a été préparé.

Pour améliorer à la fois la déshydratation, le lavage, le dessalage, l'extraction des MES et la teneur en hydrocarbures de l'eau de sortie du décanteur, l'agent conforme à l'invention comprend, de préférence, 10 à 40% en poids d'au moins un halogénure d'ammonium quaternaire tétra-alkylé, 30 à 5% en poids d'au moins une alkylènediamine polypropoxypolyéthoxylée et 35 à 5% en poids d'au moins un sulfate d'alkylènediamine polypropoxypolyéthoxylée mentionnée ci-dessus.

L'halogénure d'ammonium quaternaire tétra-alkylé préféré de l'invention est un halogénure de cétyltriméthyl ammonium et, plus particulièrement, le chlorure de cétyltriméthyl ammonium.

Les alkylènediamines polypropoxypolyéthoxylée préférées répondent à la formule générale:

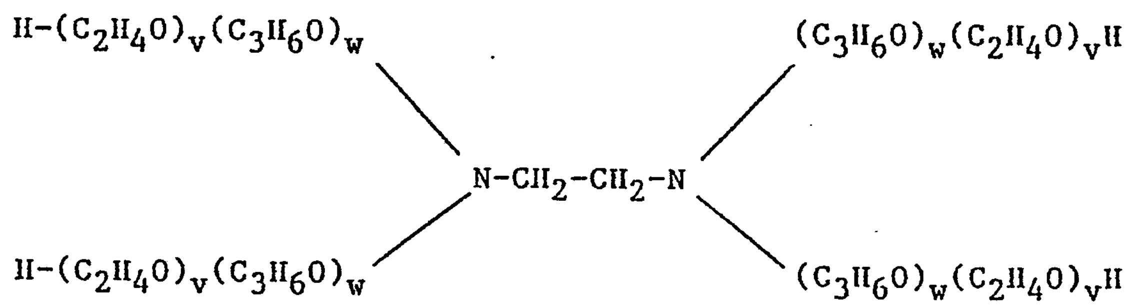

avec $1 \leq v \leq 50$, de préférence $2 \leq v \leq 30$, et $2 \leq w \leq 50$, de préférence $10 \leq w \leq 30$.

Par conséquent, les sulfates d'alkylènediamines préférés de l'invention sont des sulfates d'éthylènediamines polypropoxypolyéthoxylée définies cidessus.

Dans un mode de réalisation préféré de l'invention, le solvant aqueux est de l'eau pure contenant de 0 à 50% en poids d'isopropanol.

Chacun des agents désémulsifiants et antisalissures selon l'invention peut être appliqué au dessalage et à la déshydratation des pétroles bruts en raffinerie et sur champs pétroliers, car ils améliorent notablement les efficacités de déshydratation, de lavage et de dessalage des hydrocarbures, ainsi que l'extraction des MES, par rapport aux opérations sans injection d'additif ou avec injection d'un ou plusieurs additifs désémulsifiants ou antisalissures connus du commerce.

La concentration efficace en matières actives de l'agent selon l'invention, par rapport au pétrole brut, peut être comprise entre 1 et 50 ppm.

En outre, les agents désémulsifiants et antisalissures selon l'invention peuvent être appliqués à l'extraction de MES de forte concentration dans une huile lourde. Cette application consiste à introduire un agent selon l'invention dans de l'eau, à mélanger cette eau avec les hydrocarbures, à émulsionner le mélange eauhydrocarbures, à faire pénétrer l'émulsion dans un décanteur et à laisser décanter ladite émulsion, en introduisant éventuellement, si nécessaire, un deuxième agent selon l'invention dans l'émulsion stable du décanteur, située à l'interface eau-hydrocarbures. Sous l'action du premier et éventuellement du deuxième agent désémulsifiant, les MES décantent dans la partie inférieure dudit décanteur. Elles sont recueillies dans la phase eau du décanteur puis éliminées avec celle-ci. Le pétrole brut propre est recueilli dans la partie supérieure du décanteur.

Pour cette application, on appliquera avantageusement dans le décanteur un ou plusieurs champs électrostatiques à "haute tension" pour faciliter la coalescence des gouttelettes d'eau, et l'élimination rapide des MES.

Les exemples donnés ci-après illustrent de façon non limitative l'efficacité des agents selon l'invention appliqués à la désémulsification des mélanges eauhydrocarbures et à la prévention de l'encrassement des échangeurs thermiques.

## EXEMPLE 1

Cet exemple a pour but de comparer sur un même pétrole brut les efficacités de lavage et de dessalage des agents désémulsifiants et antisalissures selon l'invention, appelés X, par rapport à d'autres agents désémulsifiants commerciaux $C_1$ et $C_2$, ajoutés seuls dans la phase du brut. Il a également pour but de montrer l'efficacité des agents X dans l'extraction des MES des hydrocarbures.

Les agents $C_1$ et $C_2$ sont obtenus à partir d'un mélange de matières actives commerciales; ils sont introduits uniquement dans la phase du brut.

L'agent $C_1$ est un mélange de résines phénoliques polyoxyéthylées, dissoutes dans un solvant aromatique. L'agent $C_2$ est une combinaison de matières actives polyoxypropylées polyoxyéthylées comprenant au moins des résines phénoliques, des éthylènediamines, et des blocs copolymères, ces matières étant dissoutes dans un solvant aromatique.

Les agents $X_1$ et $X_2$ sont composés de matières actives vendues dans le commerce, exceptés ceux dans la composition desquels entre un sulfate d'alkylènediamine.

Ces sulfates ont été fabriqués à l'échelle pilote en discontinu dans un microréacteur fermé ayant une capacité de 2 litres, contenant un agitateur à disque pourvu de "dents de scie", plongé dans un bain thermostaté de façon à être maintenu à une température constante.

Une pompe microdoseuse située en amont permet d'introduire en continu le trioxyde de soufre sous forme liquide dans le microréacteur à un débit contrôlé. En aval du réacteur, une série de réfrigérants et de bouteilles sont disposés pour retenir le solvant de la réaction qui est ici du 1-2-dichloroéthane.

Les sulfates sont obtenus par une réaction de sulfonation d'un produit commercial alcoyloxylé, le SYNPERONIC T 1302, commercialisé par la Société ICI. Le SYNPERONIC T 1302 est une éthylènediamine polypropoxypolyéthoxylée du type 100/15, c'est-à-dire comprenant 100 moles propoxylées par molécule avec 15% en poids de radicaux éthoxylés.

Cette réaction consiste à faire réagir le trioxyde de soufre ($SO_3$) dilué de 5 à 25% en poids dans du 1.2 dichloroéthane, avec 1000 g de charge constituée par l'un des produits commerciaux cités ci-dessus, dilués à 80% en poids dans du 1.2. dichloroéthane (DCE).

TABLEAU 1

| Agent désémulsifiant et antisalissures | Composition matière active | | | Teneur % en solvant **** |
|---|---|---|---|---|
| | CTAC* (% en poids) | DA** (% en poids) | Sulfate de DA** (% en poids) | |
| $X_1$ | 30 | 10 | - | 60 |
| $X_2$ | 15 | - | 15 | 70 |

* CTAC = chlorure de cétyl triméthylammonium, matière active contenue dans l'ARQUAD 16/29, commercialisé par la Société AKZO CHEMIE.

** DA (éthylènediamine) = SYNPERONIC T 1302, commercialisé par la Société ICI.

**** 90% $H_2O$+ 10% d'isopropanol, compte tenu des solvants de l'ARQUAD 16/29.

Les conditions de marche du pilote de sulfonation sont les suivantes:
- débit de $SO_3$ dans le DCE: 1100 ml/h (980–1170 ml/h)
- rapport molaire $SO_3$/charge: < 1
- température du réacteur: < 45°C
- température de $SO_3$: ambiante
- vitesse d'agitation: 1200 t/min.
- temps de contact: environ 30 minutes

En fin de réaction, le mélange réactionnel est neutralisé par de l'ammoniaque à 25% dans l'eau; la phase eau contenant les sels inorganiques du type sulfate d'ammonium est recueillie après décantation de la phase organique constituée par les sulfates organiques et le solvant DCE. Ce solvant est évaporé de la phase organique entre 45 et 50°C sous vide, de façon à réduire au maximum le taux d'hydrolyse des sulfates organiques ainsi obtenus. Il est à noter que ces sulfates ne sont pas des produits purs, exempts des produits commerciaux dont ils sont issus.

Pour mesurer leurs efficacités de lavage et de dessalage d'un pétrole brut, les agents $X_1$ et $X_2$, ainsi que les désémulsifiants commerciaux, ont été testés en laboratoire sur un pilote de dessalage comprenant notamment une vanne de mélange pour la mise en émulsion de l'eau et du pétrole brut et un dessaleur décanteur électrostatique de type classique miniaturisé dit "à deux électrodes".

Le pétrole brut est un mélange 20/80 de pétroles bruts Maya et Brent, de densité d égale à 0,845.

Les conditions de marche du pilote sont les suivantes:
- débit de pétrole brut chargé: 3 litres à l'heure d'une charge contenant 130 ppm de sels,
- perte de charge au niveau de la vanne de mélange: 1,5 bar,

– température du dessaleur: 140°C,
– champ électrique primaire: 800 volts/cm,
– champ électrique secondaire: 200 volts/cm,
– eau de dessalage: 8% en poids, par rapport au brut.

Le taux d'additif est ajusté pour avoir 7,5 ppm de matière active par rapport au brut.

L'additif est injecté soit dans la charge (B), soit dans l'eau de dessalage (E). L'eau de dessalage est injectée par moitié à l'aspiration de la pompe à charge du pétrole brut et en amont de la vanne de mélange.

Toutes les heures, on effectue un prélèvement du pétrole brut en sortie du dessaleur, et la totalité de l'eau de soutirage du dessaleur est recueillie.

Sur ces échantillons, des mesures sont effectuées:
– sur le pétrole brut de charge et le pétrole brut dessalé: les teneurs en eau, en sels et en MES,
– sur l'eau de soutirage du dessaleur-décanteur: les teneurs en hydrocarbures et en chlorures, le ph et les matières en suspension (MES) extraites.

Un essai dure huit heures ; il comprend trois heures de mise en régime et cinq heures de mesure.

Les résultats de ces tests sont donnés dans le tableau 2 ci-après.

Ces résultats démontrent bien la supériorité des agents selon l'invention introduits dans l'eau, comparés aux additifs commerciaux existants, introduits dans le pétrole brut, puisque les efficacités de dessalage et de lavage des agents sont supérieures à celles obtenues avec les additifs $C_1$ et $C_2$. Le pouvoir d'extraction des MES des agents X est également plus grand. Les teneurs en hydrocarbures de l'eau recueillie à la sortie du dessaleur avec les agents X sont au plus égales, sinon plus faibles qu'avec les agents $C_1$ et $C_2$.

TABLEAU 2

| Nature de l'agent | Dessalage % | Lavage % | MES éliminé % | Hydrocarbures $H_2O$ (ppm) |
|---|---|---|---|---|
| $C_1$ (B) | 77 | 73 | 38 | 170 |
| $C_2$ (B) | 76 | 76 | 20 | 270 |
| $X_1$ (E) | 92 | 98 | 60 | 110 |
| $X_2$ (E) | 78 | 83 | 93 | 200 |

(E) = Introduit dans l'eau.
(B) = Introduit dans le pétrole brut.

Le tableau 2 montre également que le mélange de matières actives, CTAC et éthylènediamines ($X_1$), améliore les efficacités de dessalage et de lavage du pétrole brut, et que le mélange sulfate de DA – CTAC ($X_2$) favorise l'extraction des MES du pétrole brut.

EXEMPLE 2

Le présent exemple vise à montrer la supériorité des agents X par rapport aux additifs commerciaux $C_1$ et $C_2$ vis-à-vis des phénomènes d'encrassement.

Des essais d'encrassement ont été réalisés dans un pilote avec un mélange de pétrole brut (MAYA/BRENT: 20/80) préalablement dessalé, à l'aide de l'agent $X_1$ ou de l'un des additifs $C_1$ et $C_2$. Ce pilote comprend notamment un réacteur chauffé électriquement de façon à ce que ses parois soient maintenues à une température constante voisine de 280°C. On évalue l'encrassement par la chute de température du pétrole brut à la sortie du réacteur: elle est exprimée en °C/h.

Les résultats obtenus sont rassemblés dans le Tableau 3 ci-après:

TABLEAU 3

| Nature | % MES extrait | MES/charge ppm | Encrassement °C/h |
|---|---|---|---|
| $C_1$ (B) | 38 | 250 | 1 |
| $C_2$ (B) | 20 | 325 | 1,5 |
| $X_1$ (E) | 81 | 135 | 0 |

B = introduit dans le pétrole brut
E = introduit dans l'eau

On déduit de ce tableau 3 que plus les MES sont extraits, moins on observe d'encrasement. L'agent $X_1$ selon l'invention introduit dans la "phase eau" est plus efficace vis-à-vis de l'encrassement que les désémulsifiants $C_1$ et $C_2$ du commerce introduits dans la "phase brut".

**Revendications**

1. Agent désémulsifiant et antisalissures soluble dans l'eau, apte à séparer les mélanges eau-hydrocarbures, éventuellement mis en émulsion, notamment les émulsions eau-pétrole brut contenant des matières en suspension, ledit agent étant caractérisé en ce qu'il comprend:
– d'une part, 10 à 60% en poids d'une combinaison des composés suivants:
a– au moins un halogénure d'ammonium quaternaire tétra-alkylé de formule générale:

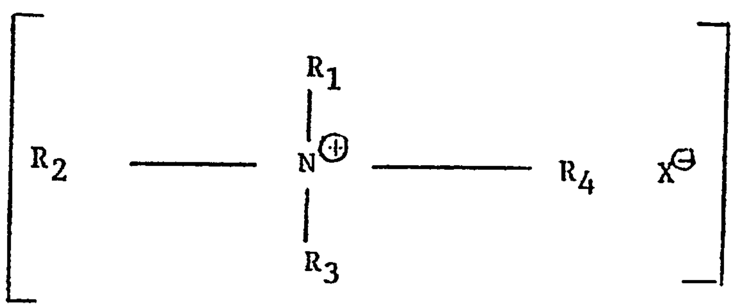

où X est un halogène; $R_1$, $R_2$ et $R_3$ étant des groupements alkyles de $C_1$ à $C_{10}$ et $R_4$ un groupement alkyle de $C_{12}$ à $C_{20}$,
b– au moins une alkylènediamine polypropoxypolyéthoxylée de formule générale:

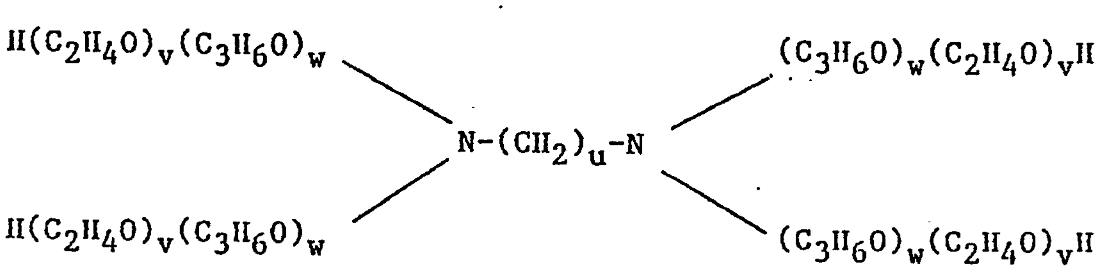

avec $1 \leq u \leq 4$, $1 \leq v \leq 50$ et $2 \leq w \leq 50$ et, de préférence, $2 \leq v \leq 30$ et $10 \leq w \leq 30$, ou son sulfate,
– et, d'autre part, 90 à 40% en poids d'un solvant aqueux contenant de 0 à 50% en poids d'un alcool choisi dans le groupe constitué par les alcanols et les polyols comprenant de 1 à 10 atomes de carbone.

2. Agent selon la revendication 1, caractérisé en ce qu'il comprend 40 à 5% en poids d'au moins un halogénure d'ammonium quaternaire tétra-alkylé et 5 à 30% en poids d'au moins une alkylènediamine polypropoxypolyéthoxylée.

3. Agent selon la revendication 1, caractérisé en ce qu'il comprend 10 à 40% en poids d'au moins un halogénure d'ammonium quaternaire tétra-alkylé et de 35 à 5% en poids d'au moins un sulfate d'alkylènediamine polypropoxypolyéthoxylée,

4. Agent selon la revendication 3, caractérisé en ce qu'il comprend 0 à 5% en poids de l'alkylènediamine polypropoxypolyéthoxylée correspondant au sulfate présent dans la composition dudit agent.

5. Agent selon l'une des revendications 1 à 4, caractérisé en ce qu'il comprend 10 à 40% en poids d'au moins un halogénure d'ammonium quaternaire tétra-alkylé, 30 à 5% en poids d'au moins une alkylènediamine polypropoxypolyéthoxylée et 35 à 5% en poids d'au moins un sulfate d'alkylènediamine polypropoxypolyéthoxylée.

6. Agent selon l'une des revendications de 1 à 5, caractérisé en ce que l'halogénure d'ammonium quaternaire tétra-alkylé est un halogénure de cétyl triméthylammonium, et, de préférence, le chlorure de cétyl triméthylammonium.

7. Agent selon l'une des revendications 1 à 6, caractérisé en ce que l'alkylènediamine polypropoxypolyéthoxylée a pour formule générale:

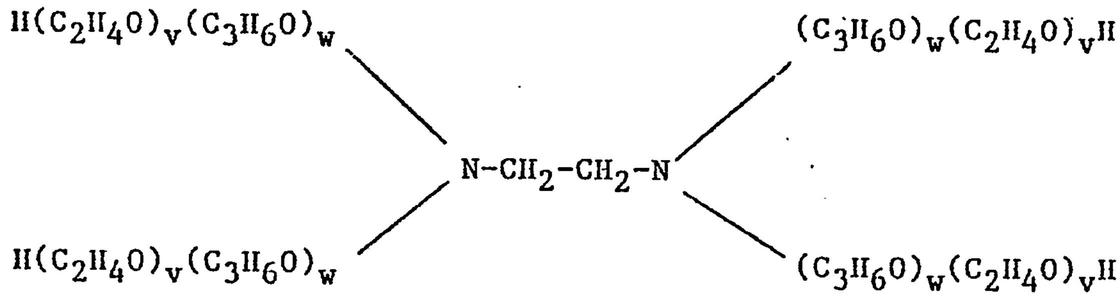

avec $1 \leq v \leq 50$, de préférence $2 \leq v \leq 30$, et $2 \leq w \leq 50$ de préférence $10 \leq w \leq 30$.

8. Application de l'agent selon l'une des revendications 1 à 7, au dessalage et/ou à la déshydratation des pétroles bruts en raffinerie et sur champ de production caractérisée en ce que la concentration en matières actives dudit agent, exprimée par rapport au pétrole brut, est comprise entre 1 et 50 ppm.

9. Application de l'agent selon l'une des revendications 1 à 7 à l'extraction des matières en suspension (MES) contenues dans un pétrole brut, caractérisée en ce que l'on introduit ledit agent dans de l'eau, on mélange cette eau avec ledit pétrole brut, on émulsionne le mélange eau-agent-pétrole brut, on fait pénétrer l'émulsion dans un décanteur, éventuellement électrostatique, on laisse décanter ladite émulsion, on introduit éventuellement dans ledit décanteur un deuxième agent désémulsifiant et antisalissures, de préférence dans l'émulsion stable à l'interface eau-pétrole-brut, on recueille les sédiments dans la phase eau à la partie inférieure dudit décanteur, puis on entraîne les sédiments de cette phase eau à l'extérieur du décanteur, le pétrole brut propre étant recueilli dans la partie supérieure du décanteur.

**Patentansprüche**

1. Wasserlösliches Demulgier- und Antischmutzmittel mit der Fähigkeit zum Trennen von Wasser/Kohlenwasserstoffe-Gemischen, einschliesslich solcher Emulsionen, insbesondere von Wasser/Roherdöl-Emulsionen, in denen Feststoffteilchen suspendiert sind, **gekennzeichnet** durch die folgende Zusammensetzung:

10 bis 60 Gewichtsprozent Gemisch aus

a) mindestens einem quarternären Tetraalkylammoniumhalogenid der allgemeinen Formel

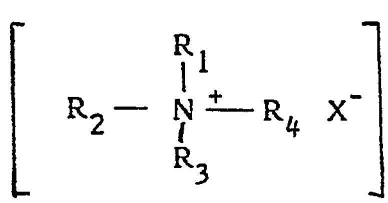

mit X = Halogen, $R_1$, $R_2$ und $R_3$ = Alkylgruppen mit 1 bis 10 Kohlenstoffatomen und $R_4$ = Alkylgruppe mit 12 bis 20 Kohlenstoffatomen sowie

b) mindestens einem Polypropoxypolyäthoxyalkylendiamin der allgemeinen Formel

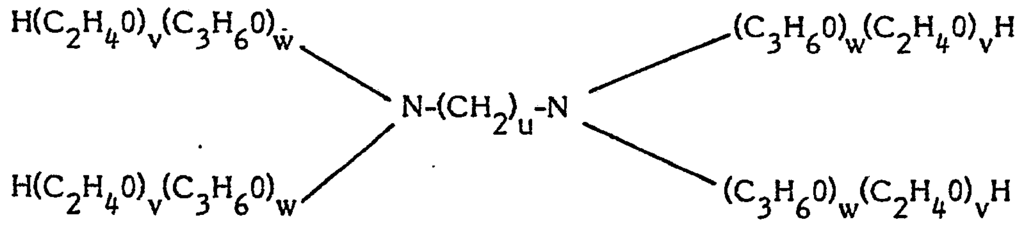

mit $1 \leq u \leq 4$, $1 \leq v \leq 50$ und $2 \leq w \leq 50$, vorzugsweise $2 \leq v \leq 30$ und $10 \leq w \leq 30$, oder seinem Sulfat und 90 bis 40 Gewichtprozent wässeriges Lösungsmittel mit einem Gehalt von 0 bis 50 Gewichtprozent an einem Alkohol aus der Gruppe der Alkanole und Polyole mit 1 bis 10 Kohlenstoffatomen.

2. Mittel nach Anspruch 1, **gekennzeichnet** durch einen Gehalt von 40 bis 5 Gewichtprozent an mindestens einem quaternären Tetraalkylammoniumhalogenid und einen Gehalt von 5 bis 30 Gewichtprozent an mindestens einem Polypropoxypolyäthoxyalkylendiamin.

3. Mittel nach Anspruch 1, **gekennzeichnet** durch einen Gehalt von 10 bis 40 Gewichtprozent an mindestens einem quarternären Tetraalkylammoniumhalogenid und einen Gehalt von 35 bis 5 Gewichtprozent an mindestens einem Polypropoxypolyäthoxyalkylendiaminsulfat.

4. Mittel nach Anspruch 3, **gekennzeichnet** durch einen Gehalt von 0 bis 5 Gewichtprozent an demjenigen Polypropoxypolyäthoxyalkylendiamin, dessen Sulfat es enthält.

5. Mittel nach einem der Ansprüche 1 bis 4, **gekennzeichnet** durch einen Gehalt von 10 bis 40 Gewichtprozent an mindestens einem quaternären Tetraalkylammoniumhalogenid, einen Gehalt von 30 bis 5 Gewichtprozent an mindestens einem Polypropoxypolyäthoxyalkylendiamin und einen Gehalt von 35 bis 5 Gewichtprozent an mindestens einem Äthoxyalkylendiaminsulfat.

6. Mittel nach einem der Ansprüche 1 bis 5, dadurch **gekennzeichnet**, dass das quaternäre Tetraalkylammoniumhalogenid ein Trimethylcetylammoniumhalogenid, vorzugsweise Trimethylcetylammoniumchlorid, ist.

7. Mittel nach einem der Ansprüche 1 bis 6, dadurch **gekennzeichnet**, dass das Polypropoxypolyäthoxyalkylendiamin die folgende allgemeine Formel aufweist:

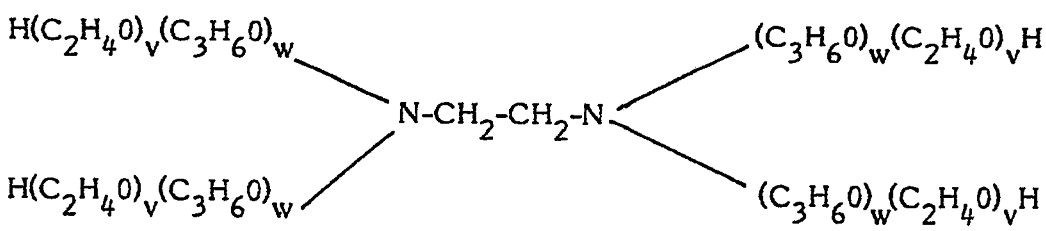

mit $1 \leq v \leq 50$, vorzugsweise $2 \leq v \leq 30$, und $2 \leq w \leq 50$, vorzugsweise $10 \leq w \leq 30$.

8. Verwendung des Mittels nach einem der Ansprüche 1 bis 7 zum Entsalzen und/oder zum Entwässern von Roherdölen in der Raffinerie und im Produktionsfeld, dadurch **gekennzeichnet**, dass die Konzentration des Mittels an aktiven Stoffen zwischen 1 und 50 ppm liegt, bezogen auf das Roherdöl.

9. Verwendung des Mittels nach einem der Ansprüche 1 bis 7 zur Extraktion von Feststoffeilchen, welche in einem Roherdöl suspendiert sind, dadurch **gekennzeichnet**, dass das Mittel Wasser zugesetzt wird, dieses Wasser mit dem Roherdöl vermischt wird, das Wasser/Mittel/Roherdöl-Gemisch emulgiert wird, die Emulsion in einen gegebenenfalls elektrostatischen Dekantierer eintreten und dekantieren gelassen wird, dem Dekantierer gegebenenfalls ein zweites Demulgier- und Antischmutzmittel zugeführt wird, und zwar vorzugsweise in die stabile Emulsion an der Wasser/Roherdöl-Grenzfläche, und die Sedimente in der Wasserphase im unteren Teil des Dekantierers gesammelt sowie anschliessend aus der Wasserphase ins Äussere des Dekantierers befördert werden, während das eigentliche Roherdöl im oberen Teil des Dekantierers gesammelt wird.

## Claims

1. Defoaming and anti-fouling agent soluble in water, capable of separating water-hydrocarbons mixtures, in certain cases emulsified, in particular water-crude oil emulsions containing suspended matter, the said agent being characterised in that it comprises:

– on the one hand, 10 to 60% by weight of a combination of the following compounds:

a. at least one tetra-alkylated quaternary ammonium halide with the general formula:

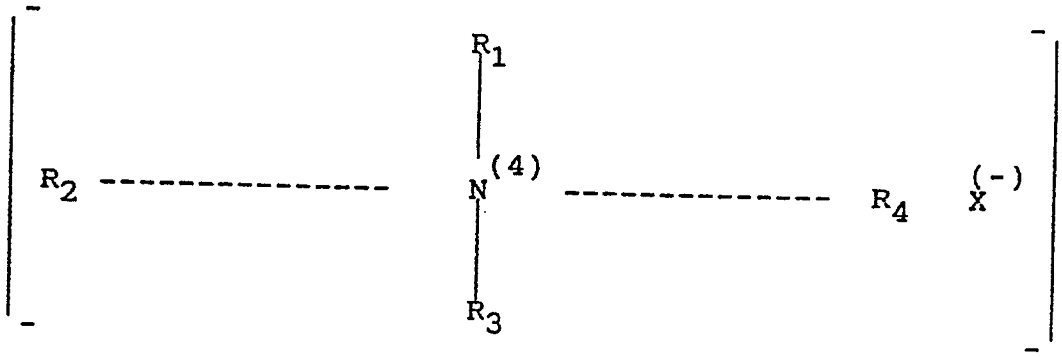

where X is a halogen; $R_1$, $R_2$ and $R_3$ being alkyl groups from $C_1$ to $C_{10}$ and $R_4$ an alkyl group from $C_{12}$ to $C_{20}$,

b. at least one polypropoxypolyethoxylated alkylene diamine with the general formula:

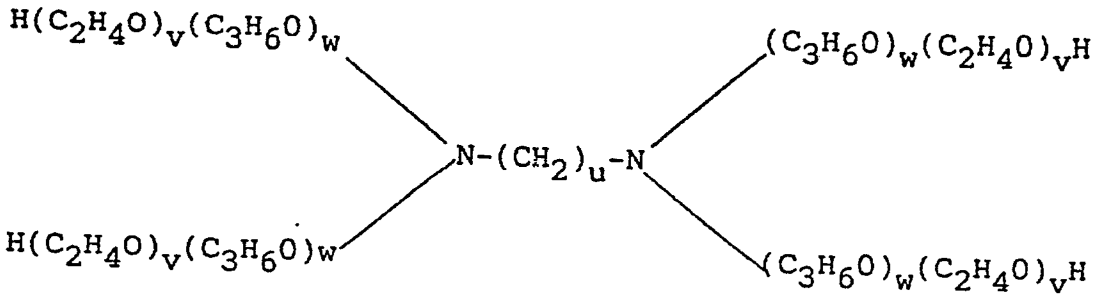

with $1 \le u \le 4$, $1 \le v \le 50$ and $2 \le w \le 50$ and, preferably, $2 \le v \le 30$ and $10 \le w \le 30$, or its sulphate,

– and, on the other hand, 90 to 40% by weight of an aqueous solvent containing from 0 to 50% by weight of an alcohol chosen from the group constituted by the alkanols and the polyols containing from 1 to 10 carbon atoms.

2. Agent according to claim 1, characterised in that it comprises 40 to 5% by weight of at least one tetra-alkylated quaternary ammonium halide and 5 to 30% by weight of at least one polypropoxypolyethoxylated alkylene diamine.

3. Agent according to claim 1, characterised in that it comprises 10 to 40% by weight of at least one tetra-alkylated quaternary ammonium halide and from 35 to 5% by weight of at least one polypropoxypolyethoxylated alkylene diamine sulphate.

4. Agent according to claim 3, characterised in that it comprises 0 to 5% by weight of the polypropoxypolyethoxylated alkylene diamine corresponding to the sulphate present in the composition of the said agent.

5. Agent according to any one of claims 1 to 4, characterised in that it comprises 10 to 40% by weight of at least one tetra-alkylated quaternary ammonium halide, 30 to 5% by weight of at least one polypropoxypolyethoxylated alkylene diamine and 35 to 5% by weight of at least one polypropoxypolyethoxylated alkylene diamine sulphate.

6. Agent according to any one of claims 1 to 5, characterised in that the tetra-alkylated quaternary ammonium halide is a trimethylammonium ketyl halide, and preferably trimethylammonium ketyl chloride.

7. Agent according to any one of claims 1 to 6, characterised in that the polypropoxypolyethoxylated alkylene diamine has as its general formula:

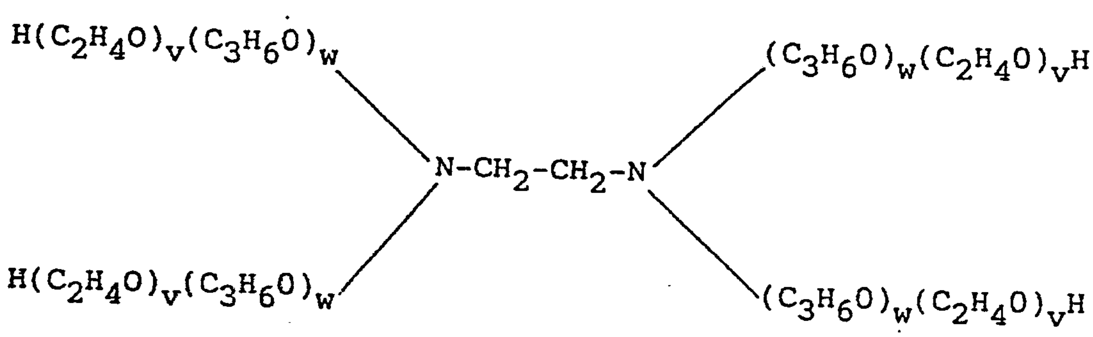

with $1 \le v \le 50$, preferably $2 \le v \le 30$, and $2 \le w \le 50$, preferably $10 \le w \le 30$.

8. Application of the agent according to any one of claims 1 to 7 for the desalination and/or the dehydration of crude oils in refineries or on production sites, characterised in that the concentration in active ingredients of the said agent, expressed with respect to the crude oil, lies between 1 and 50 ppm.

9. Application of the agent according to any one of claims 1 to 7 for extracting the suspended matter contained in a crude oil, characterised in that the said agent is added to some water, this water is mixed with the said crude oil, the water-agent-crude oil mixture is emulsified, the emulsion is introduced into a decanter, possibly an electrostatic one, the said emulsion is decanted, a second defoaming and anti-fouling agent is in certain cases introduced into the said decanter, preferably into the stable emulsion at the water-crude oil interface, the sediments are collected in the water phase from the bottom part of the said decanter, the sediments of this water phase are then entrained to the outside of the decanter, the clean crude oil being collected from the top part of the decanter.